# EUROPÄISCHE PATENTSCHRIFT

(11) **EP 2 134 987 B1**
(45) Veröffentlichungstag und Bekanntmachung des Hinweises auf die Patenterteilung: **11.04.2012**
(21) Anmeldenummer: 07724248.5
(22) Anmeldetag: 13.04.2007
(51) Int. Cl.: F16H 37/06, B01F 7/04

(54) **ANTRIEBSVORRICHTUNG FÜR DOPPELWELLENMISCHER**
DRIVE DEVICE FOR DOUBLE-SHAFT MIXERS
DISPOSITIF D'ENTRAÎNEMENT POUR UN MÉLANGEUR À DEUX ARBRES

(43) Veröffentlichungstag der Anmeldung: 23.12.2009
(73) Patentinhaber: Stetter GMBH, 87700 Memmingen (DE)
(72) Erfinder: BUCHTA, Siegfried, 87439 Kempten (DE); MÜLLER, Manfred, 87719 Mindelheim (DE)
(74) Vertreter: Bockhorni & Kollegen
(86) Internationale Anmeldenummer: PCT/EP2007/003310
(87) Internationale Veröffentlichungsnummer: WO 2008/125138

(56) Entgegenhaltungen:
- WO-A-01/85322
- WO-A-02/078829
- WO-A-02/079668
- DE-A1- 2 029 950
- US-A- 5 950 502

## Beschreibung

Die vorliegenden Erfindung betrifft eine Antriebsvorrichtung für Doppelwellenmischer mit einem Antriebsmotor und einem Getriebe, bei welchem eine Getriebeantriebswelle an einer Motorabtriebswelle des Antriebsmotors verbunden ist, eine Getriebeabtriebswelle eine Mischerwelle des Doppelwellenmischers antreibt und eine Synchronisationswelle vorgesehen sind, sowie einen Doppelwellenmischer.

Doppelwellenmischer umfassen einen Mischbehälter, in welchem zwei Mischerwellen parallel zueinander ausgerichtet sind und radial angeordnete Mischschaufeln aufweisen. Doppelwellenmischer können für das Mischen unterschiedlicher Mischgüter, insbesondere für das Mischen von Baustoffmischungen wie bspw. Beton oder Mörtelmischungen, verwendet werden. Das Mischgut wird in dem Mischbehälter dadurch durchmischt, dass die Mischschaufeln der beiden rotierenden Mischerwellen durch das Mischgut bewegt werden. Die beiden Mischerwellen sind einem Abstand zueinander parallel derart ausgerichtet, dass die Mischschaufeln sich theoretisch berühren könnten. Da dies jedoch zu Beschädigungen und Zerstörungen an den Mischschaufeln führen würde, ist es notwendig die Rotationen der beiden Mischerwellen derart abzugleichen, dass die Mischschaufeln sich in jedem Fall nicht berühren, um Beschädigungen der Mischschaufeln zu vermeiden. An dem Mischbehälter werden zwei Getriebe so befestigt, dass die Getriebeabtriebswellen jeweils mit der Mischerwelle in Eingriff stehen. Üblicherweise werden zwei Motoren vorgesehen, welche jeweils eines der Getriebe antreiben. Da die Mischerwellen, wie bereits beschrieben, zueinander synchron laufen müssen, muss eine Synchronisation der Motoren erreicht werden. Hierzu wird üblicherweise an beiden Getrieben je eine Synchronisationswelle vorgesehen. Die Synchronisationswellen sind miteinander drehsteif so verbunden, dass die Geschwindigkeiten beider Getriebe synchronisiert werden. Der Antrieb jedes Getriebes durch den Motor erfolgt häufig über Keilriemen. Alternativ werden auch Zahnriemen bei Konstruktionen eingesetzt, bei denen die Synchronisation vor dem Getriebe, wie etwa bei einer Synchronisation der Motorwellen, geschieht. Hierbei hat es sich als nachteilig erwiesen, dass die Keilriemen und Zahnriemen mit der Zeit altern und entweder reißen oder die Zähne des Zahnriemens die Synchronisation der Wellen nicht sicher gewährleisten können. Insbesondere bei stoßartigen Belastungen auf die Mischerwelle, welche bei dem Durchmischen groben Mischguts entstehen können, wird auf den Riemen eine hohe ruckartige Kraft ausgewirkt, welche bewirken kann, dass beim Zahnriemen ein Zahn überspringt, und somit die Synchronisation gestört ist. Ferner kann die Synchronisation auch über eine Schneckenwelle geschehen. Hier ist auch nachteilig, dass die Riemenspannung eingestellt werden muss, eine exakte Ausrichtung der Getriebeelemente notwendig ist und dass durch die Riemenspannung eine zusätzliche Belastung das Getriebe bewirkt wird.

Als ein weiterer Nachteil des Standes der Technik hat es sich gezeigt, dass die Motoren und Getriebe an einer Stirnseite des Doppelwellenmischers nebeneinander bzw. hintereinander angeordnet sind und somit relativ viel Platz beanspruchen.

Ferner sind Bauformen bekannt, welche zwei als Planetengetriebe ausführte Getriebe mit je einer Antriebs-, Abtriebs- und Synchronisationswelle aufweisen, wobei die Antriebswelle über einen Keilriementrieb durch den Motor angetrieben wird. Diese Bauformen weisen bauartbedingt den Nachteil eines größeren Platzbedarfs auf.

Ein weiterer Zweiwellen-Mischer ist aus der WO 0185322 A1 bekannt. Ein Zweiwellen-Mischer mit zwei als Planetengetriebe ausführte Getriebe, der eine Antriebsvorrichtung gemäß dem Oberbegriff des Anspruchs 1 offenbart, ist aus der WO 02078829 A1 bekannt.

Aufgabe der vorliegenden Erfindung ist es, eine Antriebsvorrichtung für Doppelwellenmischer zu schaffen, welche die Mischerwellen sicher synchronisiert, wenig Platz beansprucht und kostengünstig zu Fertigen ist.

Diese Aufgabe wird erfindungsgemäß für eine Antriebsvorrichtung durch die im Anspruch 1 enthaltenen Merkmale und für einen Doppelwellenmischer durch die Merkmale des kennzeichnenden Teils des Anspruchs 5 gelöst. Zweckmäßige Weiterbildungen sind durch die in den Unteransprüchen enthaltenen Merkmale gekennzeichnet.

Erfindungsgemäß wird die Drehmomentübertragung von der Motorabtriebswelle zu der Getriebeabtriebswelle, welche unmittelbar mit der Mischerwelle verbunden ist, ausschließlich über mittels mit Verzahnungen in Eingriff stehenden Wellen bewirkt. Erfindungsgemäß werden so keine Antriebe über Zahnriemen, Keilriemen oder Ketten oder vergleichbare Transmissionen verwendet. Den letztgenannten Übertragungsmitteln ist es gemein, dass das Drehmoment der Rotation über Zugkräfte übertragen wird, welche innerhalb des Riemens oder der Kette wirken. Da die wechselnden Zugkräfte im Laufe der Betriebszeit einen Verschleiß bewirken, was schließlich auch ein Reißen des Antriebsriemens verursachen kann, ist es vorteilhaft derartige Antriebsmittel innerhalb des Antriebsstrangs zu beseitigen. Außerdem besteht das Problem des Schlupfes. Erfindungsgemäß wird das Drehmoment von jedem der Motoren zu der entsprechenden Getriebeabtriebswelle über ein Zahnradgetriebe übertragen. Das Zahnradgetriebe kann Übersetzungen mittels Stirnrädern, Kegelrädern, Planetengetrieben oder Schneckenradtrieben oder ähnlichen umfassen. Bei einem Zahnradgetriebe wirken die unterschiedlichen Komponenten der Drehmomentübertragung mittels Druckkräften zueinander. Dies bedeutet, dass die Zähne unterschiedlicher Zahnräder jeweils mit Druckkräften belastet sind, welche von den Zähnen benachbarter Zahnräder bewirkt sind. Hierin ist ein Unterschied zu den aus dem Stand der Technik bekannten Getrieben zusehen, bei welchen Riementriebe verwendet werden, welche das Drehmoment über Zugkräfte übertragen.

Durch die Verbindung von den Synchronisationswellen der beiden Getriebe, wird erreicht, dass beide Getriebe und somit beide Mischerwellen synchronisiert sind. Vorteilhafterweise ist das Getriebe derart ausgestaltet, dass die Achse des Motors, welche in der Ausrichtung der Getriebeantriebswelle entspricht, die Synchronisationswelle und die Getriebeabriebswelle jeweils zueinander nicht parallel ausgerichtet sind. Die bekannten Getriebe der Doppelwellenmischer weisen üblicherweise neben einer Getriebeabtriebwelle, die in der Ausrichtung der Mischerwelle entspricht, ferner eine Synchronisationswelle auf, welche in einer zu den beiden Mischerwellen parallelen Ebene senkrecht zu der Mischerwelle liegt, und ferner eine Motorabtriebswelle, welche parallel zu der Synchronisationswelle liegt. Aus dieser Bauform ergibt sich, dass der Motor seitlich des Getriebes angeordnet werden muss, was viel Platz beansprucht. Dieser Nachteil wird in vorteilhafter Weise dadurch beseitigt, dass die genannten Achsen nicht zueinander parallel ausgerichtet sind. So kann die Lage der Motorabtriebswelle in der Vertikalen, also senkrecht zur Ebene, in welcher die Mischerwellen liegen, angeordnet sein. Dadurch kann der Raum oberhalb des Getriebes optimal zur Anbringung des Motors verwendet werden. Alternativ kann der Antriebsmotor auch unterhalb des Getriebes liegen.

Auch ist eine Ausrichtung der einzelnen Achsen in beliebige andere Richtungen denkbar.

Die oben beschriebene Ausrichtung der Achsen wird vorteilhafter Weise durch ein Kegelradgetriebe realisiert. Dieses Kegelradgetriebe wird durch ein Antriebskegelrad angetrieben, welches in vorteilhafter Weise direkt mit der Getriebeantriebswelle verbunden ist. Ein weiteres Kegelrad des Kegelradgetriebes, welches im Folgenden Abtriebskegelrad genannt wird, ist mit der Mischerwelle verbunden, wobei vorteilhafter Weise eine Übersetzungsanordnung zwischengeschaltet ist. Die Übersetzungsanordnung hat die Aufgabe die Drehzahl zu reduzieren, um so das Drehmoment zu erhöhen. Als ein drittes Kegelrad des Kegelradgetriebes wird ein Synchronisationskegelrad vorgesehen, welches mit der Synchronisationswelle drehmomentschlüssig verbunden ist. Die Synchronisationswellen beider Getriebe sind vorzugsweise über ein Kardangelenk und/oder Kupplung rotationssteif miteinander verbunden. Bei der vorliegenden Erfindung stehen somit die beiden Motoren über die Getriebe mit den Synchronisationswellen in direktem Eingriff. Hierdurch wird eine Synchronisation der Motoren erreicht.

Die bei den bekannten Doppelwellenmischern verwendeten Zahnriemen- oder Keilriemenantriebe bedingen, dass die diesen Trieb antreibende Achse mit der abtreibenden Achse parallel ausgerichtet sein müssen. Durch Verwendung eines Kegelradtriebes wird erreicht, dass die Getriebeantriebswelle, die Getriebeabtriebswelle und die Synchronisationswelle in drei unterschiedlichen Richtungen liegen können.

Im Fall, dass die Antriebsgeschwindigkeiten beider Motoren exakt gleich ist und an den Schaufeln der Mischerwellen keine ungleichen Kräfte wirken, wird das Antriebsdrehmoment des Antriebsmotors komplett auf die entsprechende Mischerwelle geleitet und die Synchronisationswellen übertragen kein Synchronisationsdrehmoment. Im Fall, dass an einer ersten Mischerwelle durch das Mischgut ein hohes Drehmoment entsteht, wirkt das Drehmoment bremsend auf das Getriebe und somit auf die Synchronisationswelle. In diesem Fall wird Antriebsdrehmoment von dem zweiten Antriebsmotor über das zweite Getriebe auf das erste Getriebe weitergeleitet, was bewirkt, dass der zweite Antriebsmotor indirekt die erste Mischerwelle teilweise antreibt und somit beide Motoren, Getriebe und Mischerwellen die gleiche Geschwindigkeit behalten. Entsprechendes gilt, falls einer der Antriebsmotoren ausfällt oder störungsbedingt eine geringere Antriebsgeschwindigkeit oder Drehmoment bewirkt.

Im Folgenden wird die Erfindung anhand von Zeichnungen beschrieben. Es zeigen:
- Fig. 1: einen Doppelwellenmischer mit Mischerwellen 5 und Mischschaufeln 4 an dessen einer Stirnseite zwei Antriebsvorrichtungen mit Getriebe mit Antriebsmotor angeordnet sind.
- Fig. 2: eine entsprechende stirnseitige Ansicht des Doppelwellenmischers
- Fig. 3: eine Seitenansicht des Doppelwellenmischers
- Fig. 4: eine 3D-Ansicht eines der Getriebe

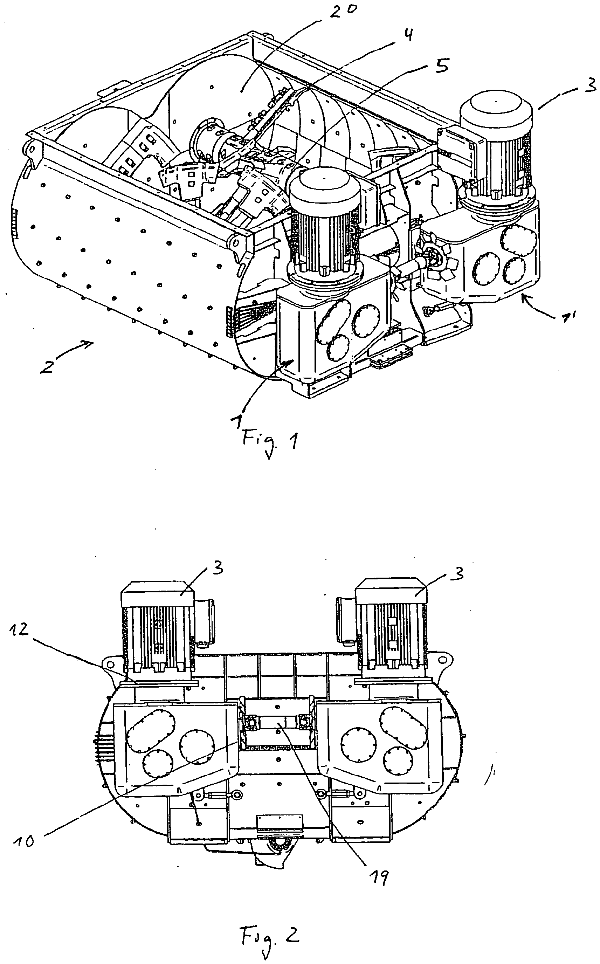

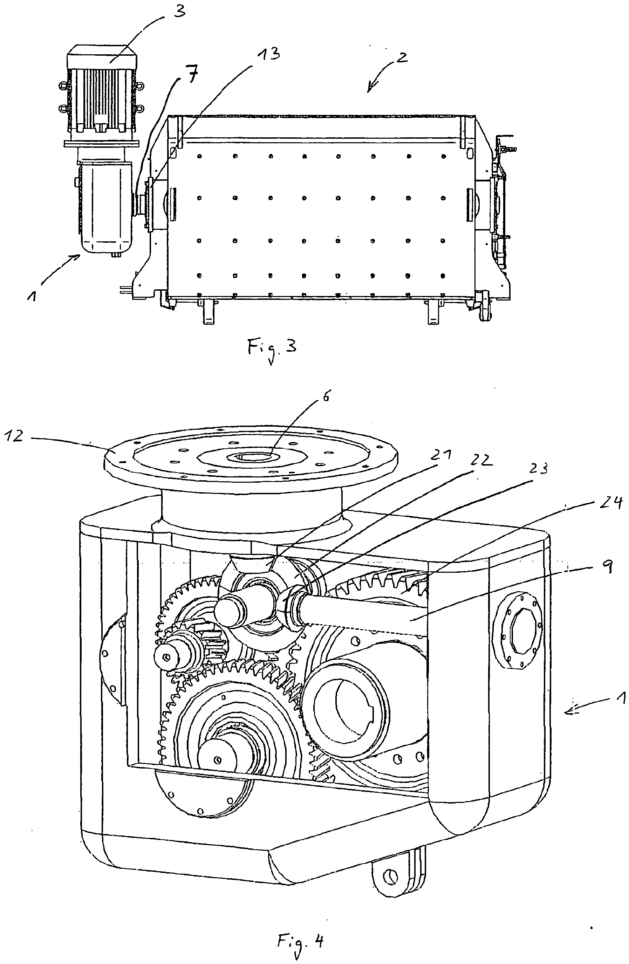

Der Doppelwellenmischer 2 umfasst entsprechend Fig. 1 einen Mischbehälter 20, in welchem zwei Mischerwellen 5 angeordnet sind. Diese Mischerwellen umfassen eine Mehrzahl von Schaufeln 4, welche von der Mischerwelle radial nach außen zeigen und am Ende eine schaufelförmige Erweiterung haben. Diese Mischschaufeln sind in jeweils einer anderen Winkellage zu der vorhergehenden angeordnet, was etwa mit Stufen einer Wendeltreppe vergleichbar ist. Die Mischerwellen 5 sind an einem axialen Ende mit jeweils einem Getriebe 1 und 1' verbunden. An jedem der Getriebe ist ein Antriebsmotor 3 vorgesehen. Von dem Antriebsmotor 3 wird über eine Motorabtriebswelle das Drehmoment des Motors über eine Getriebeantriebswelle auf das Getriebe 1 und 1' übertragen, in welchem es an ein Kegelradgetriebe weitergeleitet wird. Das Kegelradgetriebe beinhaltet ein Abtriebskegelrad 22, auf welches Drehmoment des Motors übertragen wird. Dieses Abtriebskegelrad ist über Übersetzungsstufen mit der Getriebeabtriebswelle 7 (Fig. 3) verbunden, welche aus dem Getriebe führt und mit einer der Mischerwellen 5 drehsteif verbunden ist. So treibt jeder der Antriebsmotoren 3 die entsprechende Mischerwelle 5 an. Um sicherzustellen, dass sich die Mischschaufeln der beiden Mischerwellen nicht berühren, stehen die beiden Getriebe mittels einer Synchronisation miteinander im Eingriff. Diese Synchronisation ist, wie in Fig. 2 schematisch gezeigt, mittels eines Synchronisationstriebs 19 realisiert, welcher zwei Kardangelenke umfasst. Der Synchronisationstrieb sorgt für eine rotationssteife Verbindung zwischen den Synchronisationswellen 9 und somit für entsprechend synchronisierte Drehgeschwindigkeiten der Getriebe und somit der Mischerwellen.

Fig. 3 zeigt den Doppelwellenmischer 2 in einer Seitenansicht, wobei gut ersichtlich ist, dass das Getriebe über eine Hohlwellenverbindung 7 auf die Mischerwelle aufgesteckt und auf dieser fixiert ist. Das Getriebe 1 ist über eine Drehmomentstütze 13 gegenüber dem Mischer abgestützt. Der Antriebsmotor 3 ist oberhalb des Getriebes 1 so angeordnet, dass die Motorrotationsachse eine senkrechte Ausrichtung zur Achse der jeweiligen Mischerwelle hat.

Fig. 4 zeigt eines der beiden Getriebe, welches dem linken der in Fig. 1 oder 2 dargestellten Getriebe entspricht. Beide Getriebe sind vorzugsweise spiegelsymmetrisch ausgebildet. Am oberen Ende des Getriebes ist der Motorbefestigungsflansch 12 vorgesehen, an welchem der Motor 3 (nicht dargestellt) befestigt wird. Das Antriebsmoment wird von einer Motorabtriebswelle direkt auf die Getriebeantriebswelle 6 übertragen. Diese Getriebeantriebswelle 6 umfasst an ihrem unteren Ende ein Antriebskegelrad 21. Dieses steht mit dem Abtriebskegelrad 22 im Eingriff. Dieses Abtriebskegelrad 22 ist über zwei nachfolgende, Stirnzahnräder umfassende Übersetzungsstufen mit einem Abtriebszahnrad 24, welches die nicht dargestellte Getriebeabtriebswelle aufnimmt, verbunden. Hierbei haben die Übersetzungsstufen die Aufgabe, die Rotationsgeschwindigkeit des Motors zu reduzieren und somit das Drehmoment an der Getriebeabtriebswelle zu erhöhen. Ferner steht das Abtriebskegelrad 22 im Eingriff mit einem Synchronisationskegelrad 23, welches an der Synchronisationswelle 9 befestigt ist. Im vorliegenden Ausführungsfall ist zwischen der Getriebeantriebswelle 6 mit dem Antriebskegelrad 21, der Synchronisationswelle 9 mit dem Synchronisationskegelrad 23 und der Welle des Abtriebskegelrads 22 ein Winkel von jeweils 90° vorhanden. Die Welle des Abtriebskegelrades 22 und die Abtriebsachse weisen dieselbe Ausrichtung auf. Da die Achsen des Abtriebskegelrads 22 und des Synchronisationskegelrads 23 hier eine horizontale Ebene aufspannen, weist somit die Getriebeantriebswelle 6 aufgrund einer 90°-Umlenkung in die Vertikale. Aufgrund dieser Bauform wird realisiert, dass der Antriebsmotor 3 sich oberhalb des Getriebes befindet. Aus Fig. 3 ist ersichtlich, dass der Antriebsmotor 3 in Längsrichtung des Mischers nur wenig weiter ausladend ist als das Getriebe. Aus Fig. 2 ist ersichtlich, dass der Motor in der Querrichtung weniger ausladend als das Getriebe ist, wodurch ebenfalls Bauraum gespart wird.

Ferner umfasst jede Synchronisationswelle 9 ein Lüfterrad 10, welches dem Getriebe 1 und dem Antriebsmotor 3 kühlende Luft zuführt.

## Patentansprüche

1. Antriebsvorrichtung zum Antrieb einer Mischerwelle (5) eines Doppelwellenmischers (2) mit einem Antriebsmotor (3) und einem Getriebe (1) mit einer Getriebeantriebswelle (6) zur Verbindung an eine Motorabtriebswelle des Antriebsmotors und einer Getriebeabtriebswelle (7) zur Verbindung mit der Mischerwelle (5) und mit zumindest einer vom Antriebsmotor (3) angetriebenen Synchronisationswelle (9), welche mit einem Getriebe (1') einer Antriebsvorrichtung zum Antrieb einer zweiten Mischerwelle (5) des Doppelwellenmischers (2) in Eingriff steht, so dass die Drehgeschwindigkeiten der Mischerwellen (5) zueinander synchron sind,
**dadurch gekennzeichnet, dass**
die Motorabtriebswelle mit der Getriebeabtriebswelle (7) zur Synchronisation und Übertragung des Drehmoments ausschließlich mittels über Verzahnungen in Eingriff stehenden Wellen verbunden ist.

2. Antriebsvorrichtung gemäß Anspruch 1, **dadurch gekennzeichnet, dass** die Rotationsachsen der Getriebeantriebswelle (6), der Synchronisationswelle (9) und der Getriebeabtriebswelle (7) jeweils zueinander nicht parallel sind.

3. Antriebsvorrichtung gemäß einem der vorangegangenen Ansprüche, **dadurch gekennzeichnet, dass** das Getriebe (1) ein Kegelradgetriebe mit zumindest drei Kegelrädern (21,22,23) aufweist.

4. Antriebsvorrichtung gemäß Anspruch 3, **dadurch gekennzeichnet, dass** die Getriebeantriebswelle (6) mit einem der Kegelräder direkt verbunden ist.

5. Doppelwellenmischer mit zwei Mischerwellen (5) mit jeweils einer Mehrzahl von Mischschaufeln (4) und einen Mischbehälter (20) zur Aufnahme des Mischguts, **dadurch gekennzeichnet, dass** er zwei Antriebsvorrichtungen gemäß einem der vorangegangenen Ansprüche umfasst, welche mittels ihrer Synchronisationsrvellen (9) zueinander synchronisiert sind.

6. Doppelwellenmischer gemäß Anspruch 5, **dadurch gekennzeichnet, dass** die Antriebsmotoren (3) der Antriebsvorrichtungen ausschließlich über Wellen mit zugehörigen Verzahnungen miteinander in Eingriff stehen.

## Claims

1. A drive device for driving a mixer shaft (5) of a dual shaft mixer (2), comprising a drive motor (3) and a transmission (1) with a transmission input shaft (6) for connecting to a motor output shaft of a drive motor and a transmission output shaft (7) for connecting with a mixer shaft (5) and at least one synchronization shaft (9) driven by the drive motor (3), wherein the synchronization shaft is in operative engagement with a transmission (1') of a drive device for driving a second mixer shaft (5) of the dual shaft mixer (2) so that the speeds of rotation of the mixer shafts (5) are synchronized with one another, wherein the motor output shaft is connected with the transmission output shaft (7) for synchronization and torque transmission exclusively through shafts that are in operative engagement with one another through teethings.

2. The drive device according to claim 1, wherein the rotation axes of the transmission input shaft (6), the synchronization shaft (9) and the transmission output shaft (7) are respectively not parallel with one another.

3. The drive device according to one of the preceding claims, wherein the transmission (1) includes a bevel gear transmission with at least three bevel gears (21, 22, 23).

4. The drive device according to claim 3, wherein the transmission input shaft (6) is directly connected with one of the bevel gears.

5. A dual shaft mixer with two mixer shafts (5) respectively including a plurality of mixer blades (4) and with a mixing container (20) for receiving material to be mixed, wherein the dual shaft mixer includes two drive devices according to one of the preceding claims which are synchronized relative to one another through their synchronization shafts (9).

6. The dual shaft mixer according to claim 5, wherein the drive motors (3) of the drive devices are exclusively in operative engagement with one another through shafts with associated teethings.

## Revendications

1. Dispositif d'entraînement destiné à entraîner un arbre de mélangeur (5) d'un mélangeur à deux arbres (2), ledit dispositif d'entraînement comportant un moteur d'entraînement (3) et un réducteur (1) doté d'un arbre d'entraînement de réducteur (6) destiné à être relié à un arbre de sortie du moteur d'entraînement et un arbre de sortie de réducteur (7) destiné à être relié à l'arbre de mélangeur (5) et à au moins un arbre de synchronisation (9) qui est entraîné par le moteur d'entraînement (3) et qui est en prise avec un réducteur (1') d'un dispositif d'entraînement destiné à entraîner un deuxième arbre de mélangeur (5) du mélangeur à deux arbres (2) de sorte que les vitesses de rotation des arbres de mélangeur (5) sont synchrones entre elles,
**caractérisé en ce que**
l'arbre de sortie de moteur est relié à l'arbre de sortie de réducteur (7), en vue de la synchronisation et de la transmission du couple de rotation, exclusivement au moyen d'arbres s'engrenant par le biais de dentures.

2. Dispositif d'entraînement selon la revendication 1, **caractérisé en ce que** les axes de rotation de l'arbre d'entraînement de réducteur (6), de l'arbre de synchronisation (9) et de l'arbre de sortie de réducteur (7) ne sont pas parallèles entre eux.

3. Dispositif d'entraînement selon l'une des revendications précédentes, **caractérisé en ce que** le réducteur (1) comporte un réducteur à pignons coniques doté d'au moins trois pignons coniques (21, 22, 23).

4. Dispositif d'entraînement selon la revendication 3, **caractérisé en ce que** l'arbre d'entraînement de réducteur (6) est relié directement à l'un des pignons coniques.

5. Mélangeur à deux arbres comportant deux arbres de mélangeur (5) dotés chacun d'une pluralité d'aubes de mélange (4) et d'un réservoir de mélange (20) destiné à recevoir le produit de mélange, **caractérisé en ce qu'**il comporte deux dispositifs d'entraînement selon l'une des revendications précédentes qui sont synchronisés entre eux au moyen de leur arbre de synchronisation (9).

6. Mélangeur à deux arbres selon la revendication 5, **caractérisé en ce que** les moteurs d'entraînement (3) des dispositifs d'entraînement sont engrenés entre eux exclusivement par le biais d'arbres et de dentures associées.
